# EUROPÄISCHE PATENTANMELDUNG

(11) **EP 2 913 306 A1**
(43) Veröffentlichungstag der Anmeldung: **02.09.2015**
(21) Anmeldenummer: 14156934.3
(22) Anmeldetag: 27.02.2014
(51) Int. Cl.: C02F 1/461, A62D 3/115, C02F 1/467, C02F 101/30

(54) **Verfahren zur Reinigung von Feldspritzgeräten von Pflanzenschutzmittelrückständen**

(71) Anmelder: Bayer Technology Services GmbH, 51368 Leverkusen (DE); Bayer CropScience AG, 40789 Monheim am Rhein (DE)
(72) Erfinder: Görtz, Ivonne, Dr., 50825 Köln (DE); Rämsch, Christian, Dr., 51399 Burscheid (DE); Leonhäuser, Johannes, Dr., 51467 Bergisch Gladabach (DE); Aßmann, Jens, 47281 Haan (DE); Ronge, Georg, Dr., 238255 Singapore (SG); Herbstritt, Frank, Dr., 55232 Alzey (DE); Rothweiler, Frank, 51381 Leverkusen (DE); Friessleben, Reinhard, Dr., 51375 Leverkusen (DE); Sturm, Klaus, dr., 53797 Lohmar (DE); Lembrich, David, dr., 51519 Odenthal (DE)
(74) Vertreter: BIP Patents

(57) **Zusammenfassung**

Die Erfindung betrifft ein Verfahren zur Reinigung von Feldspritzgeräten von Pflanzenschutzmittelrückständen, wobei eine Elektrolysezelle mobil auf dem Feldspritzgerät montiert ist oder stationär betrieben wird, umfassend die Schritte Bereitstellung von Wasser, Zuführen des Wassers zu auf dem Feldspritzgerät montierten Sprühköpfen, wobei die Sprühköpfe mit Pflanzenmittelrückständen kontaminiert sind, Reinigung der Sprühköpfe mit dem Wasser, Auffangen einer wässrigen Lösung aus Pflanzenschutzmittelrückständen, Zuführen der wässrigen Lösung zur Elektrolysezelle, Elektrolytische Oxidation der Pflanzenschutzmittelrückstände in der wässrigen Lösung mithilfe der Elektrolysezelle und Abführen der elektrolysierten Lösung.

## Beschreibung

Die Erfindung betrifft ein Verfahren zur Reinigung von Feldspritzgeräten von Pflanzenschutzmittelrückständen durch elektro-oxidativen Abbau.

Beim Anbau von Kulturpflanzen sind verschiedene Behandlungen mit agrochemischen und biologische Substanzen nötig, um ein optimales Wachstum und Ertragsbedingungen sicherstellen zu können. Die meisten dieser Substanzen erfordern eine fachgerechte Entsorgung, um eine Kontamination von Oberflächen- und Grundwasser zu verhindern. Auch Kreuzkontaminationen von spezifischen Herbiziden auf nicht miteinander verträglichen Pflanzen können umfangreiche Verluste verursachen. Das Verspritzen von kritischen Substanzen auf Kulturpflanzen, die als direkte Waren in den Handel kommen, wie beispielsweise Gemüse, zu einem späten Zeitpunkt kurz vor der Ernte kann zu nicht-konformen Grenzwerten führen, so dass diese nicht verkauft werden können.

Üblicherweise werden Restlösungen in einer Feldspritze nach dem Reinigen der Anlage auf dem gleichen Feld oder auf einem vorhandenen nichtkritischen Feld aufgesprüht, da die kritischen Substanzen mit der Zeit im Boden auf natürliche Weise abgebaut werden. Nichtsdestotrotz ist dieses Reinigungsverfahren zeitaufwendig. Gerade zur Hochsaison der Erntezeit ist dieser Entsorgungsweg für den Landwirt zeitlich stark begrenzt.

Typischerweise fällt Abwasser solcher Feldspritzgeräte im Volumen von 10-600 L an, wobei es Pflanzenschutzmittel-AS-Konzentrationen von 300-7500 mg/L, CSB-Konzentrationen von 500-15000 mg/L und TOC-Konzentrationen von 1000-6000 mg/L aufweist. AS bezeichnet dabei die Aktivsubstanz des entsprechenden Pflanzenschutzmittels, die üblicherweise in einer Formulierung vorliegt, CSB den chemischen Sauerstoffbedarf und TOC (total organic carbon) den gesamten organischen Kohlenstoff. Der pH-Wert beträgt üblicherweise 5-11.

In anderen Fällen kann der Landwirt die Restmengen von kritischen Substanzen auf dem Bauernhof in den Boden von sogenannten "Bio Beds" entsorgen, wobei diese Substanzen dann natürlich zersetzt werden. FR 2815891 wird beschrieben, das Wasser zu sammeln, wobei der Landwirt die Wahl hat, wie es abgebaut wird.

DE 3936413 C2 beschreibt, dass Pflanzenschutzmittel, beispielsweise Herbizide bekanntermaßen mit Hilfe sogenannter Feldspritzgeräte ausgebracht werden. Derartige Feldspritzgeräte bestehen üblicherweise aus einem Vorratsbehälter, Schläuchen und Düsen. Vor einem Wechsel des Pflanzenschutzmittels muss das Feldspritzgerät von Rückständen des alten Pflanzenschutzmittels gut gereinigt werden, um kulturspezifische Schädigungen bei nachfolgenden Spritzungen auszuschließen. Dies geschah bislang überwiegend mit Hilfe von Aktivkohlestaub. Die Reinigung mit Aktivkohlestaub war insbesondere für die reinigende Person eine sehr schmutzige Angelegenheit; darüber hinaus war es auch erforderlich, die Düsen des Feldspritzgerätes abzumontieren und einzeln zu reinigen, da sie ansonsten durch den Aktivkohlestaub verstopften. Die Reinigung von Feldspritzgerät mit Aktivkohlestaub ist somit nicht nur eine sehr schmutzige, sondern auch eine zeitaufwendige Angelegenheit. Auch ist bekannt, Spritzgeräte mit Lösungsmitteln in ihrer reinen Form zu reinigen. Derartige Lösungsmittel sind allerdings wenig umweltverträglich, so dass von deren Gebrauch an sich abzuraten ist. Diese Methode erlangte in der Vergangenheit wenig Akzeptanz, da Reste von Kohlenstoff-Partikeln die Spritzeinrichtungen landwirtschaftlicher Sprüher verstopften.

Zur Einhaltung von Rechtsvorschriften und aus Effizienzgründen wäre es wünschenswert, wenn kritische Substanzen bereits während der Fahrt zum nächsten Feld oder auf dem Bauernhof abgebaut werden könnten. Solche Verfahren sind bislang nicht verfügbar gewesen.

Bei genauer Prüfung der Bedürfnisse für ein konformes System zum Abbau kritischer Substanzen würden die Landwirte ein Onboard-System bevorzugen, welches in einen bestehenden "Cleaning in Place" (CIP) Kreislauf von landwirtschaftlichen Sprühern implementiert wird. Die abgebaute Lösung sollte einfach in bereits vorhandene Oberflächen-Abwassersysteme abgelassen werden, ohne große Umweltprobleme zu verursachen.

Es wäre möglich Systeme mit physikalischen (z.B. Wärme, pH-Wert, Bestrahlung, und Adsorption) oder chemischen Behandlungsmethoden (z.B. Oxidation und Hydrolyse) zu nutzen, um einen Abbau oder ein Entfernen kritischer Substanzen zu ermöglichen. Während adsorptive Systeme mit Aktivkohlepatronen anstelle von Pulver das Staubproblem lösen würden, müsste das Volumen dieser Patronen in Abhängigkeit von der Konzentration der kritischen Substanz enorm hoch sein. Zudem müssen Probleme bei der Entsorgung solcher Patronen, sowie die Regeneration gelöst werden.

Auch die Bereitstellung oxidativer oder ätzender/saurer Stoffe in einem separaten Vorratstank zur Zersetzung der kritischen Substanzen auf der Feldspritze wäre denkbar. Allerdings setzt die manuelle Handhabung von Peroxiden und Säuren praktische Grenzen. Das Erzeugen von oxidativen Stoffen durch einen Ozon-Generator wäre ebenfalls denkbar, setzt jedoch in Abhängigkeit der Menge an Ozon eine große Geräteausstattung voraus, was in einem hohen elektrischen Verbrauch resultiert. Zudem werden hohe Ansprüche an die Robustheit des Systems gestellt, vor allem wenn eine zusätzliche UV-Zelle am Feldsprühgerät installiert wird, um die Reaktivität des Sauerstoffs zu erhöhen.

Eine Methode zur Behandlung mit kritischen Substanzen belasteter Abwässer besteht darin, das Abwasser in einer Elektrolysezelle, welche mit Anoden mit einem hohen Überpotenzial zur Bildung von Sauerstoff bestückt sind, einem elektrischen Strom auszusetzen. Ab einer gewissen Potenzialdifferenz zwischen den Elektroden findet an der Anode eine schrittweise Oxidation der gelösten organischen Bestandteile des Elektrolyten (Abwasser) statt, wobei diese je nach Wahl des Anodenmaterials und ggf. weiterer Prozessbedingungen direkt oder über intermediäre reaktive Spezies ablaufen kann. Als hierfür geeignete Elektrodenmaterialien ist z.B. Platin auf Tantal, Niob und/oder Titan, diverse Metalloxide wie z.B. PbO₂, IrO₂ oder SnO₂ bzw. Mischoxide von Ta/Ir, Ta/Pt, Ta/Pd oder Ta/Rh (z.B. DE 44 26 901 A1) oder aber Kohlenstoff basierte Materialien wie Glaskohlenstoff oder elektrisch leitfähiger Diamant, jeweils auf metallischen Trägern oder Grafit, bekannt.

Die Oxidation durch elektrochemische Oxidation wäre eine mögliche und bekannte Option und wird für die Dekontamination kritischer Substanzen in stationären Anlagen oder Schiffen verwendet. EP 1036861 B1 beschreibt hierzu ein Verfahren zur elektrochemischen Umsetzung organischer Verbindungen an Diamantelektroden dadurch gekennzeichnet, dass die mindestens eine organische Verbindung mit einer Elektrode in Kontakt gebracht wird, die aus einem Grundkörper und einer auf dem Grundkörper aufgebrachten Diamantschicht besteht, wobei die Diamantschicht porenfrei ist und einen Borgehalt zwischen 10 ppm und 10000 ppm aufweist, und die Elektrode nach einem Verfahren herstellbar ist.

US 5399247 A beschreibt ein Verfahren zur Behandlung eines gelösten Stoffes in einer flüssigen Lösung, um die Lösung geeigneter zum Ablassen in die Umgebung zu machen, bei dem man die Lösung mit einer Anode elektrolysiert, die elektrisch leitfähigen, kristallinen, dotierten Diamanten enthält, um den gelösten Stoff zu oxidieren.

Bisher erlaubt die Effizienz solcher Systeme, wie sie in EP 1036861 B1 und US 5399247 A beschrieben werden, aus Gründen der Größe und des Energieverbrauchs keine Anwendung als kompakte Baueinheit an einer mobilen, beweglichen Spritzvorrichtung.

Ein besonders zielführender Ansatz zur Erhöhung der Stromeffizienz der elektro-oxidativen Abwasserbehandlung bei niedrigen CSB-Werten liegt in der Optimierung der Zellgeometrie bzw. damit verbundenen Strömungsführung des Elektrolyten in der Zelle, um den Stofftransport insbesondere an der Anode durch möglichst starke konvektive Anteile zu intensivieren. Die US 7232507 B2 beschreibt hierzu beispielsweise eine Anordnung planarer, im Wechsel gestapelter Anoden und Kathoden mit dazwischen liegenden netzartigen Isolatorfolien, welche in einem fluiddichten Gehäuse eingebracht sind und parallel zu den Elektrodenoberflächen durchströmt werden. Die Netz- oder gewebeartige Ausbildung der Isolatoren sowie ggf. einer der Elektroden sorgt hier für eine wiederholte Umlenkung des Elektrolyten und damit für einen über die gesamte Elektrodenfläche recht intensiven Stoffaustausch. Als nachteilig muss man allerdings bei dieser Anordnung die recht aufwändige interne Kontaktierung der Elektroden betrachten. Insbesondere alle fluidberührenden Bestandteile der Anodenkontaktierung sind bei der elektro-oxidativen Abwasserbehandlung einer sehr hohen Korrosionsbelastung ausgesetzt und müssen daher aus denselben teuren und größtenteils schwer zu bearbeitenden Materialien (z.B. Niob) gefertigt werden, wie sie auch für die Anodensubstrate eingesetzt werden.

Weiterhin sind Anordnungen mit Elektroden bekannt, welche entweder mit rippen-, noppen- oder kanalartigen Strukturen ausgestattet sind und im Wesentlichen entlang ihrer Oberfläche um- bzw. durchströmt werden. Beispiele hierfür sind u.a. in der DE 35 19 573 A1, der DE 25 38 000 A1, der DE 100 25 167 A1, der JP 326 6 617 B2 oder der WO 2008 056 336 A1 gegeben. Auch hier sorgen wiederholte Strömungsumlenkungen für eine Intensivierung des Stofftransports, führen jedoch aufgrund der vergleichsweise langen Fluidwege durch die Zelle zu mitunter recht hohen Druckverlusten. Zudem ist die Herstellung reliefartiger Strukturen wie z.B. Gräben oder Rippen aus den für BDD-Elektroden vorzugsweise eingesetzten Materialien ziemlich aufwändig.

Um der Forderung nach geringen Druckverlusten nachzukommen, werden ferner Anordnungen vorgeschlagen, bei denen mit Durchbrüchen versehende Elektroden gestapelt und im Wesentlichen in Stapelrichtung, also vornehmlich senkrecht zur Elektrodenoberfläche durchströmt werden. Hierbei sind Ausführungen mit geometrisch unbestimmten Durchbrüchen beschrieben, die entweder allgemein als permeabel oder durchlässig dargestellt sind (z.B. WO 2012 004 769 A1 oder KR 10 2012 002 189 A1) oder z.B. als Drahtgeflecht beschrieben werden (DE 603 06 172 T2). Ferner finden sich Ausführungen mit geometrisch zumindest qualitativ genauer definierten Durchbrüchen wie Löchern oder Schlitzen, welche entweder zwischen den einzelnen Stapelebenen fluchtend angeordnet sind (JP 2011 246 799) oder deren relative Position zwischen den Ebenen des Stapels nicht explizit angegeben und daher als nicht genauer definiert anzunehmen ist (z.B. KR 101 080 227 B1). Als Referenzelle für den Leistungsvergleich mit der erfindungsgemäßen Verfahren eingesetzten Mikro-Lamellenelektrodenzelle wurde beispielsweise eine kommerziell erhältliche Laborzelle eingesetzt, welche im Kern aus einem im Wesentlichen entlang der Stapelrichtung durchströmten Stapel von Elektroden bestand, welche jeweils aus einem ringförmigen Rahmen und einem darin eingeschweißten Streckmetallblech zusammengesetzt waren.

Während sich eine ganze Reihe meist feinporiger Substratformen wie z.B. Drahtgeflechte, Sinterfritten oder Metallschäume nicht oder nur mit großen Schwierigkeiten stabil mit Bor leitfähig gemachtem Diamant (BDD) beschichten lassen, weisen Elektrodenanordnungen mit definierten, jedoch in Hauptströmungsrichtung fluchtenden Durchbrüchen von vornherein ungünstige Stofftransporteigenschaften auf. Dem gegenüber kann bei Anordnungen mit nicht definierter gegenseitiger Positionierung der Elektrodendurchbrüche innerhalb des Elektrodenstapels zwar mit einem gewissen, meist zufälligen, für den Stofftransport förderlichem Versatz der Durchbrüche in benachbarten Ebenen innerhalb des Elektrodenstapels gerechnet werden, das Potenzial derartiger Geometrien zur Intensivierung des Stofftransports wird jedoch bei weitem nur unzureichend ausgeschöpft, sofern nicht Form, Größe und gegenseitige Positionierung der Durchbrüche sowohl innerhalb der Elektroden als auch hinsichtlich der benachbarten Elektroden sinnvoll definiert werden.

Die der Erfindung zugrunde liegende Aufgabe bestand daher darin, ein Verfahren zur Reinigung von Feldspritzgeräten von Pflanzenschutzmittelrückständen mithilfe einer Durchflusszelle mit leitfähigem Diamant beschichteten Elektroden zu entwickeln, wobei die Durchflusszelle aufgrund ihrer Geometrie einen gegenüber konventionellen Zellen deutlich verbesserten Stoffübergang aus dem Elektrolyten zu den Elektroden (insbes. zur Anode) aufweist. Das Verfahren sollte mobil auf einem Feldspritzgerät als auch stationär zur Restmengenverwertung von Beizstationen und/oder nach der Flugzeugapplikation verwendet werden können, wobei die eingesetzte Zelle zudem einen einfach und kostengünstig zu realisierenden Aufbau, einen niedrigen Druckverlust und eine hohe Stabilität, insbesondere gegenüber im Betrieb auftretender Korrosion vorweisen sollte.

Die Aufgabe wurde überraschenderweise gelöst durch ein Verfahren zur Reinigung von Feldspritzgeräten von Pflanzenschutzmittelrückständen, wobei eine Elektrolysezelle, umfassend wenigstens einen Einlass und wenigstens einen Auslass für den Elektrolyten, ferner umfassend eine Anzahl von planaren, mit durchströmbaren Öffnungen versehenen Elektroden, von denen wenigstens eine durch funktionelle Beschichtung als Anode mit einem im Vergleich zur Standard-Wasserstoffelektrode erhöhten Überpotenzial für die Bildung von Sauerstoff und wenigstens eine weitere als Gegenelektrode (Kathode) ausgebildet ist, die Elektroden hinsichtlich ihrer Polarität in alternierender oder paarweise alternierender Reihenfolge angeordnet einen Stapel bilden, ferner umfassend eine Anzahl von Rahmenelementen, welche jeweils einzeln zwischen benachbarten Elektroden angeordnet sind, wobei die Rahmenelemente gleichzeitig für eine gegenseitige elektrische Isolierung, eine gegenseitige fluidische Abdichtung sowie für einen definierten gegenseitigen Abstand der jeweils angrenzenden Elektroden sorgen und der so gebildete Elektrodenstapel derart zwischen dem Einlass und dem Auslass eingebaut ist, dass ein zur Umgebung hin fluiddichter, durchströmbarer Elektrolytpfad vom Einlass durch den Elektrodenstapel zum Auslass entsteht, dadurch gekennzeichnet, dass benachbarte Elektroden einen gegenseitigen lichten Abstand von nicht mehr als 0,5 mm haben, die durchströmbaren Öffnungen in den Elektroden als parallel zueinander verlaufende, die Elektroden im Wesentlichen senkrecht zu ihrer Oberfläche durchbrechende Schlitze oder Schlitzreihen ausgebildet sind, wobei die einzelnen Schlitze eine Breite von nicht mehr als 1,5 mm und eine Länge von mindestens der dreifachen Breite vorweisen und in einem zu ihrer maximalen Ausdehnung senkrechten lichten Abstand von wenigstens der zweifachen Schlitzbreite zueinander stehen und die Schlitze bzw. Schlitzreihen in benachbarten Elektroden jeweils parallel zueinander verlaufen und senkrecht zu der maximalen Ausdehnung der Schlitze bzw. Schlitzreihen definiert zueinander versetzt angeordnet sind in der Weise, dass der Abstand einer Schlitzreihe in einer Elektrode zu jeder unmittelbar benachbarten Schlitzreihe in den unmittelbar benachbarten Elektroden um nicht mehr als 25% variiert, mobil auf dem Feldspritzgerät montiert ist oder stationär betrieben wird, umfassend die Schritte a) Bereitstellung von Wasser, b) Zuführen des Wassers zu auf dem Feldspritzgerät montierten Sprühköpfen, wobei die Sprühköpfe mit Pflanzenmittelrückständen kontaminiert sind, c) Reinigung der Sprühköpfe mit dem Wasser, d) Auffangen einer wässrigen Lösung aus Pflanzenschutzmittelrückständen, e) Zuführen der wässrigen Lösung zur Elektrolysezelle, f) Elektrolytische Oxidation der Pflanzenschutzmittelrückstände in der wässrigen Lösung mithilfe der Elektrolysezelle und g) Abführen der behandelten Lösung, gelöst.

In einer bevorzugten Ausführungsform wird die elektrolysierte Lösung aus Schritt d) der Reinigung der Sprühköpfe in Schritt b) zugeführt. In einem solchen Verfahren wird in einem Kreislauf die nach der Elektrolyse von Pflanzenmittelrückständen weitgehend gereinigte Lösung zur erneuten Reinigung der Sprühköpfe des Feldspritzgeräts verwendet. Ein solches Verfahren ist insbesondere beim mobilen Einsatz vorteilhaft, da Ressourcen eingespart werden können.

Eine weitere Möglichkeit ist, dass das Verfahren kontinuierlich durchgeführt wird, so dass eine zeitliche Optimierung erreicht werden kann.

Vor der elektrolytischen Oxidation in Schritt f) kann optional eine Partikelabtrennung durchgeführt werden. Dies ist insbesondere für Formulierungen von Pflanzenschutzmitteln sinnvoll, die in Wasser nicht vollständig löslich sind. Hierdurch kann die Effizienz der Elektrodenzelle gesteigert werden.

Bei der Elektrolyse von partikelhaltigen Abwässern z.B. bedingt durch Formulierungshilfsstoffe der Pflanzenschutzmittel kann eine Filtration vor der elektrolytischen Oxidation durchgeführt werden. Als Filtration wird im vorliegenden Fall ein Verfahren zur Trennung von Feststoffteilchen aus Flüssigkeiten (Suspensionen) verstanden. Die Filtration dient der Verminderung der Partikelkonzentration beim Durchströmen eines Filtermediums. Bei solchen Filtrationen werden als Filtermedien übliche Tiefenfilterkartuschen genutzt, die auch als Einweg-Produkte verfügbar sind.

Zur weiteren Reduktion des CSB kann in einer anderen bevorzugten Ausführungsform eine Adsorption an Aktivkohle durchgeführt werden. Durch eine nachgeschaltete Adsorption an Aktivkohle kann der CSB-Wert noch weiter gesenkt werden, so dass noch niedrigere Grenzwerte erreicht werden können.

Das erfindungsgemäße Verfahren wird bei Flussraten durch die Elektrolysezelle von 30 L/h bis 1000 L/h, bevorzugt von 100 L/h bis 600 L/h durchgeführt.

Die Temperatur des Abwassers durch die Elektrolysezelle beträgt von 10 °C bis 80 °C, bevorzugt 20 °C bis 60 °C.

Der pH-Wert des Abwassers beim erfindungsgemäßen Verfahren kann von 2 bis 12 betragen.

In einer weiteren Ausführungsform beträgt der CSB-Gehalt der wässrigen Lösung in Schritt d) und e) von 500 mg/L bis 40 g/L, bevorzugt 500 mg/L bis 20 g/L, besonders bevorzugt 500 mg/L bis 10 g/L.

In einer bevorzugten Ausführungsform des Verfahrens beträgt der Pumpdruck von 1 bis 15 bar, bevorzugt 6 bis 10 bar.

Besonders vorteilhaft beim erfindungsgemäßen Verfahren sind Stromdichten im Bereich von 1 kA/m² bis 5 kA/m², bevorzugt im Bereich von 2 kA/m² bis 3 kA/m².

In einer bevorzugten Ausführungsform werden Zirkulationsströme durch die Zelle genutzt, die zu Leerrohrgeschwindigkeiten innerhalb der Schlitzdurchbrüche in den Elektroden im Bereich von 0,3 m/s bis 3 m/s führen, wobei eine Erhöhung der Strömungsgeschwindigkeit regelmäßig zu einer Erhöhung der Stromausbeute der Zelle im transportlimitierten Betriebsbereich führt.

Durch Zugabe von löslichen Sulfaten (z.B. NaSO₄) in einem Konzentrationsbereich von etwa 2 g/L bis etwa 50 g/L, bevorzugt 5 g/L bis etwa 20 g/L kann in einer weiteren Ausführungsform die Stromausbeute der Zelle im transportlimitierten Betriebsbereich noch weiter gesteigert werden.

Die in dieser Beschreibung genannten Wirkstoffe der Pflanzenschutzmittel sind beispielsweise aus "The Pesticide Manual", 15. Auflage 2009, oder in dem entsprechenden "The e-Pesticide Manual", Version 5.2 (2008-2011), jeweils herausgegeben vom BCPC (British Crop Protection Council), und aus "The Compendium of Pesticide Common Names" im Internet (Webseite: http://www.alanwood.net/pesticides/) bekannt.

Beispiele für im Handel erhältliche Pflanzenschutzmittel sind unter anderem auch folgende Herbizid-Produkte, ohne jedoch hierauf beschränkt zu sein: Atlantis® WG, Fenikan® und Merlin® der Bayer CropScience AG. Atlantis® WG enthält ein Gemisch der Wirkstoffe Mesosulfuronmethyl, Iodosulfuron-methyl-natrium und Mefenpyr-diethyl. Als Wirkstoffe bei Fenikan® kommen Diflufenican und Isoproturon zum Einsatz, bei Merlin® Cyprosulamid und Isoxaflutol.

Die Elektrolysezelle umfasst wenigstens einen Einlass und wenigstens einen Auslass für den Elektrolyten, ferner eine Anzahl von planaren, mit durchströmbaren Öffnungen versehenen Elektroden, von denen wenigstens eine durch funktionelle Beschichtung als Anode mit einem im Vergleich zur Standard-Wasserstoffelektrode erhöhten Überpotenzial für die Bildung von Sauerstoff und wenigstens eine weitere als Gegenelektrode (Kathode) ausgebildet ist, welche hinsichtlich ihrer Polarität in alternierender oder paarweise alternierender Reihenfolge angeordnet einen Stapel bilden, ferner umfassend eine Anzahl von Rahmenelementen, welche jeweils einzeln zwischen benachbarten Elektroden angeordnet sind, wobei die Rahmenelemente gleichzeitig für eine gegenseitige elektrische Isolierung, eine gegenseitige fluidische Abdichtung sowie für einen definierten gegenseitigen Abstand der jeweils angrenzenden Elektroden sorgen und der so gebildete Elektrodenstapel derart zwischen dem Einlass und dem Auslass eingebaut ist, dass ein zur Umgebung hin fluiddichter, durchströmbarer Elektrolytpfad vom Einlass durch den Elektrodenstapel zum Auslass entsteht, dadurch gekennzeichnet, dass
- benachbarte Elektroden einen gegenseitigen lichten Abstand von nicht mehr als 0,5 mm haben,
- die durchströmbaren Öffnungen in den Elektroden als parallel zueinander verlaufende, die Elektroden im Wesentlichen senkrecht zu ihrer Oberfläche durchbrechende Schlitze oder Schlitzreihen ausgebildet sind, wobei die einzelnen Schlitze eine Breite von nicht mehr als 1 mm und eine Länge von mindestens der dreifachen Breite vorweisen und in einem zu ihrer maximalen Ausdehnung senkrechten lichten Abstand von wenigstens der zweifachen Schlitzbreite zueinander stehen und
- die Schlitze bzw. Schlitzreihen in benachbarten Elektroden jeweils parallel zueinander verlaufen und senkrecht zu der maximalen Ausdehnung der Schlitze bzw. Schlitzreihen zueinander definiert versetzt angeordnet sind in einer Weise, dass der Abstand einer Schlitzreihe in einer Elektrode zu jeder unmittelbar benachbarten Schlitzreihe in den unmittelbar benachbarten Elektroden um nicht mehr als 25% variiert.

Gegenstand der Erfindung ist daher ein Verfahren zur Reinigung von Feldspritzgeräten von Pflanzenschutzmittelrückständen mithilfe einer ebensolchen Elektrolysezelle, welche im Folgenden auch als Mikro-Lamellenelektrodenzelle bezeichnet wird.

Der wesentliche Vorteil der erfindungsgemäßen Elektrolysezelle gegenüber dem Stand der Technik besteht darin, dass die definierte Geometrie und gegenseitige Ausrichtung der Durchbrüche in den Elektroden zu hohen Stofftransportkoeffizienten bei relativ geringen Druckverlusten führt.

Durch die konkrete Kombination weiterer, z.T. im Einzelnen bekannter Kennzeichen ergeben sich als weitere Vorzüge der erfindungsgemäßen Elektrolysezelle gegenüber dem überwiegenden Teil des Stands der Technik, dass
- die planaren, mit durchströmbaren Öffnungen versehenen Elektroden bzw. Elektrodensubstrate einfach und kostengünstig durch zweidimensional trennende Verfahren wie z.B. Laser- oder Wasserstrahlschneiden aus kommerziell gut verfügbaren Halbzeugen wie Folien oder Blechen gefertigt und mit verfügbaren Verfahren mit stabilen und homogenen Oberflächenbeschichtungen (z.B. BDD) versehen werden können,
- eine Kontaktierung der Elektroden z.B. durch an deren Rand ausgebildete oder angebrachte Kontaktlaschen außerhalb des Fluid führenden und damit dem Korrosionsangriff durch den Elektrolyten ausgesetzten Bereichs stattfinden kann,
- die hohe Funktionsintegration (Abstandshalter, elektrische Isolierung, fluidische Abdichtung) der aus einer oder wenigen Einzelkomponenten bestehenden Rahmenelemente einen sehr einfachen und damit auch kostengünstig realisierbaren Zellaufbau ermöglicht und insbesondere

Die als Anoden ausgebildeten Elektroden sind regelmäßig mit einer gezielt aufgebrachten Oberflächenschicht versehen, welche bei Einsatz mit vornehmlich wässrigen Elektrolyten eine besonders hohe Überspannung für die Erzeugung von Sauerstoff aufweisen und idealerweise die elektrolytische Erzeugung von Hydroxylradikalen begünstigen. Bewährt haben sich in diesem Zusammenhang Beschichtungen mit bestimmten Metalloxiden wie PbO2, IrO2 oder Sn02 bzw. Mischoxide von Ta/Ir, Ta/Pt, Ta/Pd oder Ta/Rh sowie Kohlenstoff basierte Materialien wie Glaskohlenstoff, elektrisch leitfähiger diamantartiger Kohlenstoff (DLC) oder elektrisch leitfähiger Diamant. Bevorzugt werden allerdings Beschichtungen mit elektrisch leitfähigem Diamant, insbesondere solche mit bordotiertem Diamant (BDD) eingesetzt, wobei die Schichtdicke bevorzugt Werte von 1 µm bis 5 µm annimmt. Für die Aufbringung der Beschichtung sind grundsätzlich alle dem Fachmann bekannten und hierfür geeigneten Verfahren möglich, im Falle elektrisch leitender Diamantschichten sind dies beispielsweise plasmaunterstützte CVD (chemical vapour deposition) Verfahren.

Sofern die Zelle mehr als eine Anode und mehr als eine Kathode enthält, sind diese innerhalb des Elektrodenstapels in der Zelle entweder alternierend ("AKAK") oder paarweise alternierend ("AAKKAAKK", "AKKAKK" oder "AAKAAK"), bevorzugt jedoch alternierend angeordnet.

Während die als Kathoden ausgebildeten Elektroden in der Zelle im Prinzip aus jedwedem elektrisch leitfähigen Material gefertigt sein können, welches den mechanischen, chemischen und thermischen Belastungen im Betrieb gewachsen ist - bevorzugt kommen hier z.B. Edelstähle, Kupfer, Aluminium sowie deren Legierungen oder aber Graphit, ggf. auch Nickelbasislegierungen zum Einsatz - ist für die als Anoden ausgebildeten Elektroden ein Basiswerkstoff zu wählen, der über diese Anforderungen hinaus insbesondere ein geeignetes Substrat für die funktionelle (elektrokatalytisch aktive) Beschichtung der Elektrode darstellt und den besonders hohen elektrochemischen Korrosionsbelastungen im Betrieb auch dann noch gewachsen ist, wenn die Beschichtung Beschädigungen oder punktuelle Leckagen aufweist, die einen direkten Kontakt des Elektrodensubstrats mit dem Elektrolyten zur Folge haben. Die Eignung als Substrat für die Oberflächenbeschichtung schließt dabei u.a. die Kompatibilität des Materials mit den Bedingungen des Beschichtungsprozesses, eine möglichst gute Übereinstimmung des Wärmeausdehnungskoeffizienten mit dem der Beschichtung, eine gute Haftung der Beschichtung, geringe bzw. kontrollierbare Interdiffusion zwischen Basis- und Schichtwerkstoff und ggf. solche spezifische Oberflächeneigenschaften ein, welche das Abscheide- bzw. Wachstumsverhalten der Beschichtung positiv beeinflussen können. Insbesondere im Falle einer Beschichtung mit leitfähigem Diamant bevorzugte Basiswerkstoffe für die Anoden sind daher die Metalle Niob, Wolfram, Tantal, Molybdän, Titan oder Legierungen hieraus sowie dotiertes Silizium, welche unter den elektro-oxidativen Bedingungen im Betrieb ein stabile und diffusionsdichte Oxidschicht (Passivschicht) ausbilden. Besonders bevorzugte Basiswerkstoffe für die Anoden sind Niob, Tantal oder Titan, besonders bevorzugt Niob.

Insbesondere aus wirtschaftlichen Gründen vorteilhaft erweist sich die Fertigung der Elektroden (bzw. im Falle der Anoden der Substrate) aus flachen Halbzeugen wie Folien oder Blechen, wobei diese Dicken im Bereich von 0,2 mm bis 3 mm, bevorzugt zwischen 0,5 und 1,5 mm aufweisen. Dabei ist aufgrund des meist hohen Materialpreises grundsätzlich die Wahl einer möglichst geringen Materialdicke anzustreben. Dabei muss jedoch eine hinreichende Beigesteifigkeit gewährleistet bleiben, um einerseits ein Abplatzen der funktionellen (elektrokatalytisch aktiven) Beschichtung bei bzw. unmittelbar nach deren Herstellung - z.B. aufgrund thermischer Spannungen beim Abkühlen - zu unterbinden und andererseits im Betrieb, d.h. unter Druckbelastung durch den fließenden Elektrolyten, einen ausreichend präzise definierten Abstand der Elektroden über deren gesamte Fläche zu gewährleisten.

Die laterale Formgebung der Elektroden bzw. Elektrodensubstrate erfolgt vorzugsweise durch zweidimensional konturdefinierende Trennverfahren wie z.B. Wasserstrahlschneiden, Laserschneiden oder Formätzen, besonders bevorzugt durch Wasserstrahlschneiden. Je nach Aufbau der Konstruktion, insbesondere der Rahmenelemente, kann zusätzlich eine Einbringung von Dichtnuten erforderlich sein, die bevorzugt durch Fräsen oder Senkerodieren, besonders bevorzugt durch Fräsen, (ggf. auch HSC-Fräsen) erfolgt.

Die Anzahl und Größe der Elektroden, insbesondere der Anoden, und damit deren insgesamt im Prozess wirksame Fläche A definiert im Zusammenspiel mit dem in der Zelle realisierten Stofftransportkoeffizienten *kₘ*, dem eingebrachten elektrischen Strom I *= j·A* und dem zu behandelnden Gesamtvolumen V an Elektrolyt (Abwasser) die (i.d.R. aufgrund von Sättigungseffekten zeitabhängige) Abbaurate des chemischen Sauerstoffbedarfs. Sie ist folglich so zu dimensionieren, dass bei vorgegebenem Startwert ein gewünschter Endwert des CSB innerhalb einer üblicherweise vorgegebenen Zeitspanne erreicht werden kann.

Um bei somit gegebener Gesamtanodenfläche besonders gute Stofftransporteigenschaften bei dennoch nicht zu großem Druckverlust in der Zelle zu erreichen, ist es im nächsten Schritt vorteilhaft, die Anzahl (und damit Größe) der Elektroden, deren gegenseitigen Abstand sowie die Breite und den gegenseitigen Abstand der Schlitze bzw. Schlitzreihen aufeinander und auf den Elektrolytmengenstrom durch die Zelle geeignet abzustimmen. Hierbei kann davon ausgegangen werden, dass eine Erhöhung der Anzahl fluidisch in Reihe geschalteter Elektroden, eine Verringerung des lichten Abstands zwischen den Elektroden, eine Erhöhung deren Dicke, eine Verringerung der Schlitzbreite in den Elektroden, eine Vergrößerung des gegenseitigen Abstands der Schlitze bzw. Schlitzreihen innerhalb der Elektroden sowie eine Erhöhung des Elektrolytmengenstroms durch die Zelle jeweils zu einer Erhöhung sowohl des Stofftransportkoeffizienten also auch zu einer Vergrößerung des Druckverlusts führen. Die Erhöhung des Druckverlustes erfolgt hierbei stets in einer höheren Potenz des jeweiligen der hier genannten Parameter als der Anstieg des Stofftransportkoeffizienten und ist daher bei der Auslegung geeignet abzuwägen. Als bevorzugt haben sich Schlitzbreiten zwischen 0,1 und 1,5 mm, Schlitzabstände zwischen 2 mm und 10 mm und lichte Elektrodenabstände zwischen 0,1 mm und 0,5 mm erwiesen. Als besonders bevorzugt können Schlitzbreiten zwischen 0,2 und 0,8 mm, Schlitzabstände zwischen 3 mm und 8 mm und lichte Elektrodenabstände zwischen 0,2 mm und 0,4 mm betrachtet werden, wobei die Schlitzbreite bevorzugt nicht größer als die halbe Elektrodendicke sein sollte. Als vorteilhaft können ferner Ausführungen der erfindungsgemäßen Zelle betrachtet werden bei denen der Abstand der Schlitze bzw. Schlitzreihen innerhalb jeder Elektrode sowie in allen Elektroden innerhalb der Zelle um nicht mehr als ±10% variiert, besonders bevorzugt konstant ist. Ebenso als bevorzugt zu betrachten sind Ausführungen der erfindungsgemäßen Zelle, bei denen der gegenseitige Abstand benachbarter Schlitze bzw. Schlitzreihen in benachbarten Elektroden um nicht mehr als ±10% variiert, besonders bevorzugt konstant ist. Aus fertigungstechnischen Gründen kann es dabei vorteilhaft sein, die Anordnung der Schlitze bzw. Schlitzreihen durch geeigneten Versatz zu einer Symmetrielinie der Elektrodenaußenkontur so zu gestalten, dass die Geometrie der Anoden durch Achsenspiegelung bzw. Rotation um 180° aus der Geometrie der Kathoden hervorgeht bzw. umgekehrt.

Die zwischen den Elektroden angeordneten Rahmenelemente können jeweils aus einer einzelnen oder aus mehreren Komponenten bestehen, wobei die Funktionen als Abstandhalter, elektrisches Isolationselement und fluidisches Dichtelement ggf. auf diese Komponenten verteilt sein können. Im einfachsten Fall bestehen die Rahmenelemente aus einem einheitlichen, elektrisch isolierenden Werkstoff mit definiert elastischem (ggf. auch teilweise plastischem) Verformungsverhalten und weisen eine gleichförmige Dicke auf. Möglich ist auch ein schichtartiger Aufbau der Rahmenelemente mit einer zu beiden Dichtoberflächen hin elastischen, elektrisch isolierenden Schicht und einem festeren Kernmaterial (z.B. in Form einer Folie oder eines Gewebes), welches dem Rahmenelement eine zusätzliche mechanische Festigkeit verleiht. Durch definierte Verpressung eines solchen Rahmenelements zwischen den Elektroden wird gleichzeitig ein definierter lichter Abstand, eine fluidische Abdichtung sowie eine elektrische Isolationswirkung zwischen den jeweils an das Rahmelement angrenzenden Elektroden erreicht. Bevorzugt werden in diesem Fall elastomere Materialien, insbesondere solche mit hoher chemischer Beständigkeit verwendet, bei denen bereits mit geringen Flächenpressungen eine zuverlässige Dichtwirkung erreicht wird. Durch großzügige Dimensionierung der Dichtungsbreite - Werte zwischen 5 mm und 15 mm haben sich hier bewährt - kann die Variation der Dichtungshöhe über einen breiten Bereich von Verspannkräften so gering gehalten werden, dass selbst bei sehr grober Definition dieser Verspannkräfte (z.B. über die Anzugsmomente der für die Verspannung verwendeten Schrauben) eine hinreichend genaue Definition der Elektrodenabstände möglich ist. Derartige einteilige Rahmenelemente können vorteilhaft z.B. durch Wasserstrahlschneiden oder Stanzen aus handelsüblichen Elastomerfolien gefertigt werden und eignen sich für sehr einfache, kostengünstige und kompakte Aufbauten einer erfindungsgemäßen Mikro-Lamellenelektrodenzelle, wenn die Druck-, Temperatur- und chemischen Beständigkeitsanforderungen an diese nicht zu hoch sind. Sofern Halbzeuge aus geeignetem Material mit der gewünschten Dicke verfügbar sind, kann diese Ausführungsform des Rahmenelements als bevorzugt betrachtet werden.

In einer weiteren möglichen Ausführungsform der Rahmenelemente bestehen diese aus einem Distanzrahmen definierter Dicke, welcher jeweils aus elektrisch isolierendem Material gefertigt oder mindestens zu den Elektroden hin mit einer elektrischen Isolierung überzogen ist, sowie aus einem elastischen Dichtelement, welches zusammen mit dem Distanzrahmen in den durch diesen definierten Spalt zwischen den Elektroden eingesetzt ist. Bevorzugt liegt das Dichtelement jeweils schlüssig innerhalb des Distanzrahmens, so dass dieser als Stützelement wirkt, also das Dichtelement gegenüber dem Druck des in der Zelle befindlichen Elektrolyten abstützt. Auf diese Weise können Rahmenelemente realisiert werden, die auch eine Abdichtung zwischen den Elektroden gegenüber höheren Elektrolytdrücken ermöglicht. Aus Gründen einer verbesserten Handhabung kann es dabei auch vorteilhaft sein, dass das Dichtelement stoffschlüssig (z.B. durch Auf-/Einvulkanisieren) mit dem Distanzelement verbunden ist.

Bei einer dritten Variante der Rahmenelemente bestehen diese aus einem Distanzrahmen definierter Dicke , welcher jeweils aus elektrisch isolierendem Material gefertigt oder mindestens zu den Elektroden hin mit einer elektrischen Isolierung überzogen ist, sowie aus einem oder zwei elastischen Dichtelementen, welche in Nuten in den angrenzenden Elektroden eingebracht sind. Durch die Verlegung der Dichtfunktion in den Raum der Elektroden ermöglicht diese Ausführungsform die Verwendung auch sehr dünner Distanzrahmen, welche bevorzugt aus dünnen Kunststofffolien, besonders bevorzugt aus Fluorkunststofffolien (z.B. PTFE, PFA oder FEP) hergestellt werden können. Hiermit können folglich besonders kleine Interelektrodenabstände realisiert werden. Die Fertigung der Distanzrahmen kann dabei mit geringem Aufwand z.B. durch Laser- oder Wasserstrahlschneiden, in größeren Stückzahlen auch besonders wirtschaftlich durch Stanzen erfolgen. Als Dichtelemente kommen bevorzugt O-Ringe infrage, welche in einer breiten Vielfalt an Maßen und Werkstoffen (z.B. NBR, EPDM, FKM oder FFKM) verfügbar sind. Je nach Steifigkeit des Distanzrahmens werden zwei unmittelbar einander gegenüber liegende oder zwei parallel versetzt geführte Dichtelemente eingesetzt. Bei sehr dünnen Distanzrahmen mit geringer Biegesteifigkeit kann es auch ausreichend sein, nur ein Dichtelement pro Distanzrahmen einzusetzen.

Für die elektrische Kontaktierung der Elektroden erweist es sich als vorteilhaft, diese mit Kontaktlaschen auszustatten derart, dass die Kontaktlaschen im montierten Zustand aus dem Elektrodenstapel herausragen, und somit außerhalb des Elektrolyt führenden Zellenvolumens mit dem jeweiligen Pol der Stromversorgung verbunden werden können. Im einfachsten und bevorzugten Fall sind die Kontaktlaschen integraler Bestandteil der Geometrie der Elektroden bzw. Elektrodensubstrate und gehen somit aus deren Fertigung direkt mit hervor. Besonders bevorzugt besitzen die Kontaktlaschen eine Bohrung und sind so gestapelt, dass die Bohrungen der Laschen, welche zur jeweils gleichen Elektrodenpolarität (Anode/Kathode) gehören, fluchtend zueinander angeordnet sind, zwischen benachbarten Kontaktlaschen Kontaktscheiben eingebracht sind, deren Dicke dem lichten Abstand zwischen benachbarten Elektroden gleicher Polarität entspricht und die Elektroden jeweils gleicher Polarität auf diese Weise gänzlich oder in Gruppen z.B. durch Verschraubung elektrisch zusammengeschaltet und mit einer gemeinsamen Zuleitung zur Stromversorgung ausgestattet werden können.

Nachfolgende Beispiele sollen die Leistungsfähigkeit der erfindungsgemäßen Elektrolysezelle anhand besonderer Ausführungsformen der Zelle und der Instrumentierung veranschaulichen, ohne diese jedoch zu beschränken:

### Beispiel 1: Elektrochemische Oxidation von Phenol mit einer Zelle konventioneller Geometrie

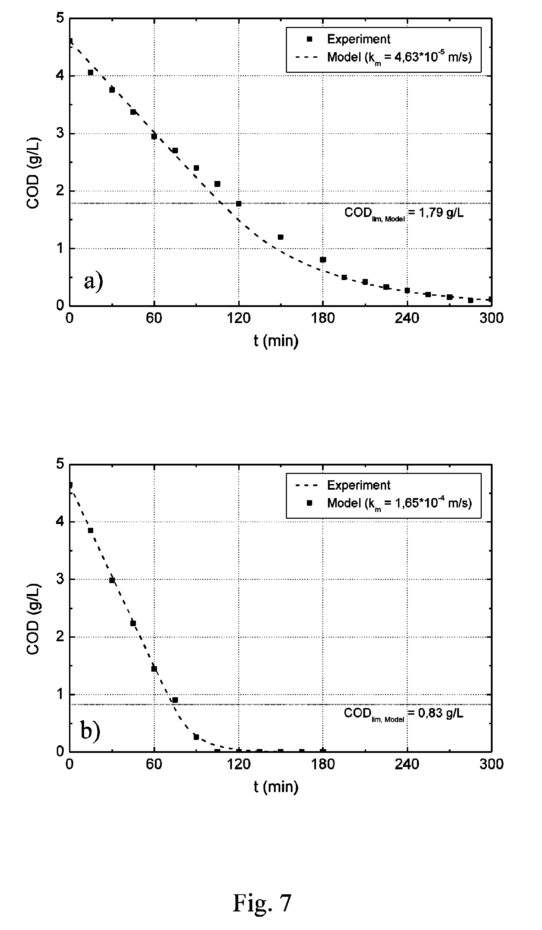

Ein künstliches Abwasser mit 2 g/L Phenol und 1 g/L Natriumchlorid in VE-Wasser wurde angesetzt. 3 L der Lösung wurden in die Versuchsapparatur bestehend aus Vorlage- und Rücklaufgefäß mit pH-Messung und Gasabsaugung, Kreiselpumpe, Durchflussmesser und Elektrolysezelle gefüllt und mit 120 g Natriumsulfat versetzt. Anschließend wurde die Lösung bei Raumtemperatur 5,5 Stunden lang bei 100 mA/cm² (entspr. 16 A) und einem Umwälzvolumenstrom von 950 L/h mit einer kommerziell verfügbaren Labor-Elektrolysezelle mit Streckmetallelektroden elektrochemisch behandelt. Die in kreisförmige Rahmenbleche eingeschweißten Streckmetallgitter hatten hierbei eine Maschenweite von ca. 7,5 mm, eine Stegbreite von ca. 2,4 mm, eine Dicke von ca. 2,0 mm und waren zwischen den Ebenen zwar in etwa parallel zueinander ausgerichtet, standen jedoch in keinerlei definierter Positionierung zueinander. Anoden und Kathoden waren im direkten Wechsel zueinander angeordnet ("AKAK"). Der lichte Abstand zwischen benachbarten Elektroden betrug dabei ca. 1,5 mm, ihre aktive Fläche 40 cm². Die Leitfähigkeit der Lösung lag zu Anfang des Versuchs bei 45 mS/cm, wobei sich eine Spannung von 6,2 V an der Elektrode einstellte. Dabei wurde der Stromeintrag während des Versuchs mehrfach manuell nachgestellt, um einen konstanten Wert einzuhalten. Während der Versuchslaufzeit wurden Proben entnommen und hinsichtlich CSB und Phenol analysiert. Der zeitliche Verlauf der gemessenen CSB-Werte ist in Figur 7a) zusammen mit einer angepassten Modellkurve dargestellt.

### Beispiel 2: Elektrochemische Oxidation von Phenol mit erfindungsgemäßer Mikro-Lamellenelektrodenzelle

Ein künstliches Abwasser wurde nach derselben Vorschrift wie in Beispiel 1 angesetzt. Dieselbe Menge Abwasser wurde mit derselben Menge Natriumsulfat wie in Beispiel 1 versetzt und 3 Stunden lang bei einer Stromdichte von 167 mA/cm² (entspr. 32 A) mit einer erfindungsgemäßen Mikro-Lamellenelektrodenzelle bei demselben Volumenstrom wie in Beispiel 1 elektrochemisch behandelt. Die Zelle war mit 2 mm dicken Elektroden bestückt, welche mit 0,7 mm breiten Schlitzen in regelmäßiger paralleler Anordnung mit jeweils 6,7 mm lichtem Abstand zueinander versehen waren. Die Schlitze waren so positioniert, dass sie innerhalb des Elektrodenstapels jeweils genau mittig zwischen den Schlitzen der Nachbarelektroden lagen. Zahl und Abfolge der Elektroden war identisch zu denen in der Vergleichszelle aus Beispiel 1 gewählt. Die aktive Fläche der Elektroden betrug jeweils 48,5 cm², ihr lichter Abstand 0,3 mm. Zu Beginn des Versuchs wurde eine Leitfähigkeit von 46 mS/cm gemessen und es stellte sich eine Spannung von 5,8 V ein. Während der Versuchslaufzeit wurden Proben entnommen und hinsichtlich CSB und Phenol analysiert. Der zeitliche Verlauf der gemessenen CSB-Werte ist in Figur 7b) zusammen mit einer angepassten Modellkurve dargestellt. Im Vergleich zu Figur 7a) ist deutlich zu erkennen, dass der CSB-Wert, bei dem der strombegrenzte lineare in den transportbegrenzten exponentiellen CSB-Abbau übergeht, trotz der höher angesetzten Stromdichte wesentlich reduziert ist. Die Modellierung der Kurven liefert für die Mikro-Lamellenelektrodenzelle einen um Faktor 3 bis 4 höheren Stofftransportkoeffizienten im Vergleich zur konventionellen Zelle, womit sich deutlich kürzere Behandlungszeiten bei insgesamt höherer Stromeffizienz und damit (auch in Verbindung mit einem niedrigeren Spannungsabfall über die Zelle) verringertem Gesamtenergieeintrag ergeben.

### Beispiele 3: Elektrochemische Oxidation von Merlin® mit einer Zelle konventioneller Geometrie

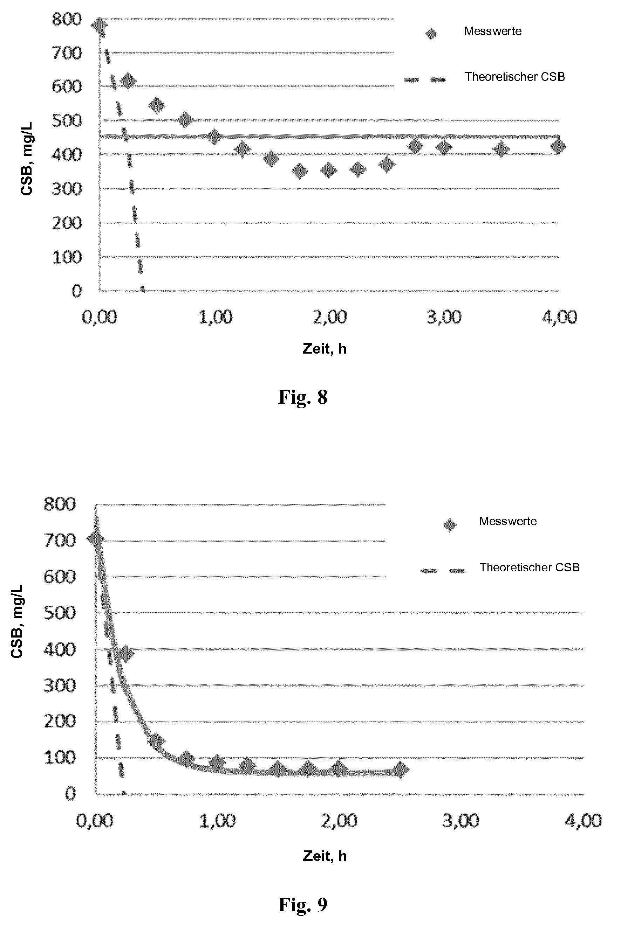

Ein künstliches Abwasser mit 700 mg/L des Pflanzenschutzmittels Merlin® in VE-Wasser wurde angesetzt. 3 L der Lösung wurden in die Versuchsapparatur bestehend aus Vorlage- und Rücklaufgefäß mit pH-Messung und Gasabsaugung, Kreiselpumpe, Durchflussmesser und Elektrolysezelle gefüllt. Anschließend wurde die Lösung unter den gleichen Versuchsbedingungen wie in Beispiel 1 beschrieben elektrolysiert. Während der Versuchslaufzeit wurden Proben entnommen und hinsichtlich CSB analysiert. Der zeitliche Verlauf der gemessenen CSB-Werte ist in Figur 8) zusammen mit einer angepassten Modellkurve dargestellt.

### Beispiel4: Elektrochemische Oxidation von Merlin® mit erfindungsgemäßer Mikro-Lamellenelektrodenzelle

Ein künstliches Abwasser wurde nach derselben Vorschrift wie in Beispiel 3 angesetzt. Dieselbe Menge Abwasser wurde unter den gleichen Versuchsbedingungen und mit der gleichen Mikro-Lamellenelektrodenzelle wie in Beispiel 2 beschrieben elektrolysiert. Während der Versuchslaufzeit wurden Proben entnommen und hinsichtlich CSB analysiert. Der zeitliche Verlauf der gemessenen CSB-Werte ist in Figur 9) zusammen mit einer angepassten Modellkurve dargestellt.

Die Modellierung der Kurven von Figur 8) und 9) liefert für die Mikro-Lamellenelektrodenzelle einen höheren Stofftransportkoeffizienten im Vergleich zur konventionellen Zelle, womit sich deutlich kürzere Behandlungszeiten bei insgesamt höherer Stromeffizienz und damit (auch in Verbindung mit einem niedrigeren Spannungsabfall über die Zelle) verringertem Gesamtenergieeintrag ergeben.

### Beispiel 5: Elektrochemische Oxidation von Atlantis® mit einer Zelle konventioneller Geometrie

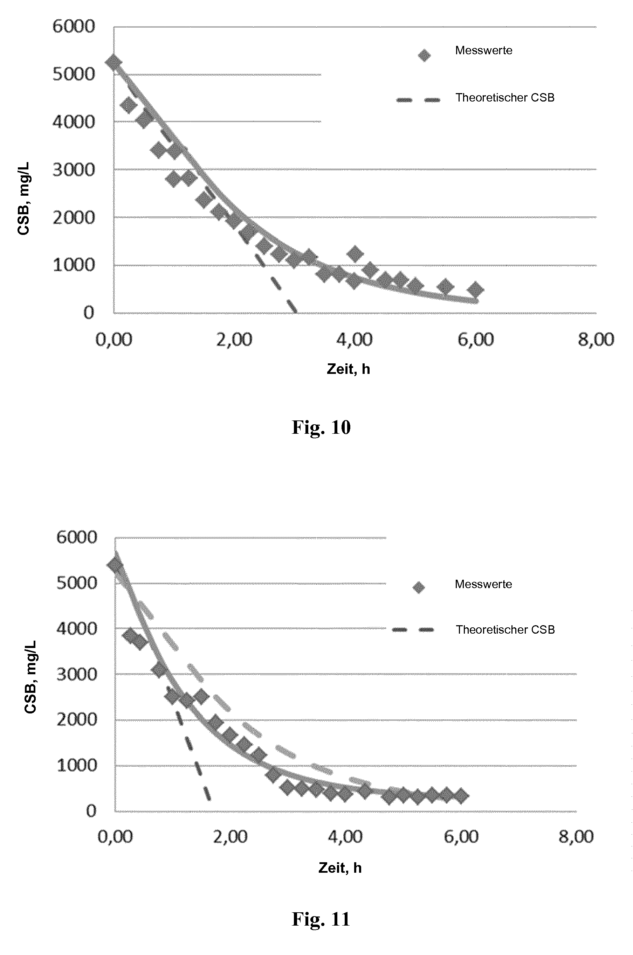

Ein künstliches Abwasser mit 5300 mg/L des Pflanzenschutzmittels Atlantis® in VE-Wasser wurde angesetzt. 3 L der Lösung wurden in die Versuchsapparatur bestehend aus Vorlage- und Rücklaufgefäß mit pH-Messung und Gasabsaugung, Kreiselpumpe, Durchflussmesser und Elektrolysezelle gefüllt. Anschließend wurde die Lösung unter den gleichen Versuchsbedingungen wie in Beispiel 1 beschrieben elektrolysiert. Während der Versuchslaufzeit wurden Proben entnommen und hinsichtlich CSB analysiert. Der zeitliche Verlauf der gemessenen CSB-Werte ist in Figur 10) zusammen mit einer angepassten Modellkurve dargestellt.

### Beispiel 6: Elektrochemische Oxidation von Atlantis® mit erfindungsgemäßer Mikro-Lamellenelektrodenzelle

Ein künstliches Abwasser wurde nach derselben Vorschrift wie in Beispiel 5 angesetzt. Dieselbe Menge Abwasser wurde unter den gleichen Versuchsbedingungen und mit der gleichen Mikro-Lamellenelektrodenzelle wie in Beispiel 2 beschrieben elektrolysiert. Während der Versuchslaufzeit wurden Proben entnommen und hinsichtlich CSB analysiert. Der zeitliche Verlauf der gemessenen CSB-Werte ist in Figur 11) zusammen mit einer angepassten Modellkurve dargestellt.

Die Modellierung der Kurven von Figur 10) und 11) liefert für die Mikro-Lamellenelektrodenzelle einen höheren Stofftransportkoeffizienten im Vergleich zur konventionellen Zelle, womit sich deutlich kürzere Behandlungszeiten bei insgesamt höherer Stromeffizienz und damit (auch in Verbindung mit einem niedrigeren Spannungsabfall über die Zelle) verringertem Gesamtenergieeintrag ergeben.

Die Erfindung wird anhand der folgenden Figuren beispielhaft erläutert ohne sie jedoch darauf zu beschränken. Es zeigen:
- Figur 1: Eine erfindungsgemäße Mikro-Lamellenelektrodenzelle in perspektivischer und teilweise winklig geschnittener Darstellung;
- Figur 2: Eine erfindungsgemäße Mikro-Lamellenelektrodenzelle in zwei zueinander orthogonalen Seitenansichten, jeweils zur Hälfte längs geschnitten;
- Figur 3: Beispielhafte Elektrodengrundrisse mit unterschiedlichen Ausführungsformen von Schlitzen darin;
- Figur 4: Einen schematischen Längsschnitt durch einen Elektrodenstapel (Ausschnitt), betrachtet in Richtung des Verlaufs der Schlitzöffnungen in den Elektroden, sowie einen beispielhaften Elektrodengrundriss, jeweils mit Bezeichnung der relevanten geometrischen Bezugsgrößen;
- Figur 5: Schematische Längsschnitte durch einen Elektrodenstapel (Ausschnitt) mit unterschiedlichen Ausführungsformen von Rahmenelementen;
- Figur 6: Beispielhafte vereinfachte Darstellungen von möglichen Einbauvarianten der Mikro-Lamellenelektrodenzelle in eine Anlage zur elektro-oxidativen Abwasserbehandlung;
- Figur 7: Den gemessenen und berechneten zeitlichen Verlauf des CSB (engl. "COD" für "chemical oxygen demand") in Beispielexperimenten mit einer konventionellen (a) bzw. einer Mikro-Lamellenelektrodenzelle (b).
- Figur 8: Den gemessenen und berechneten zeitlichen Verlauf des CSB in einem Beispielexperiment mit einer konventionellen Elektrodenzelle.
- Figur 9: Den gemessenen und berechneten zeitlichen Verlauf des CSB in einem Beispielexperiment mit einer Mikro-Lamellenelektrodenzelle.
- Figur 10: Den gemessenen und berechneten zeitlichen Verlauf des CSB in einem Beispielexperiment mit einer konventionellen Elektrodenzelle.
- Figur 11: Den gemessenen und berechneten zeitlichen Verlauf des CSB in einem Beispielexperiment mit einer Mikro-Lamellenelektrodenzelle.
- Figur 12: Den resultierenden CSB in einem Beispielexperiment mit anderen Vergleichsbeispielen
- Figur 13: Einen typischen Aufbau eines Feldspritzgerätes mit einem integrierten CIP-System

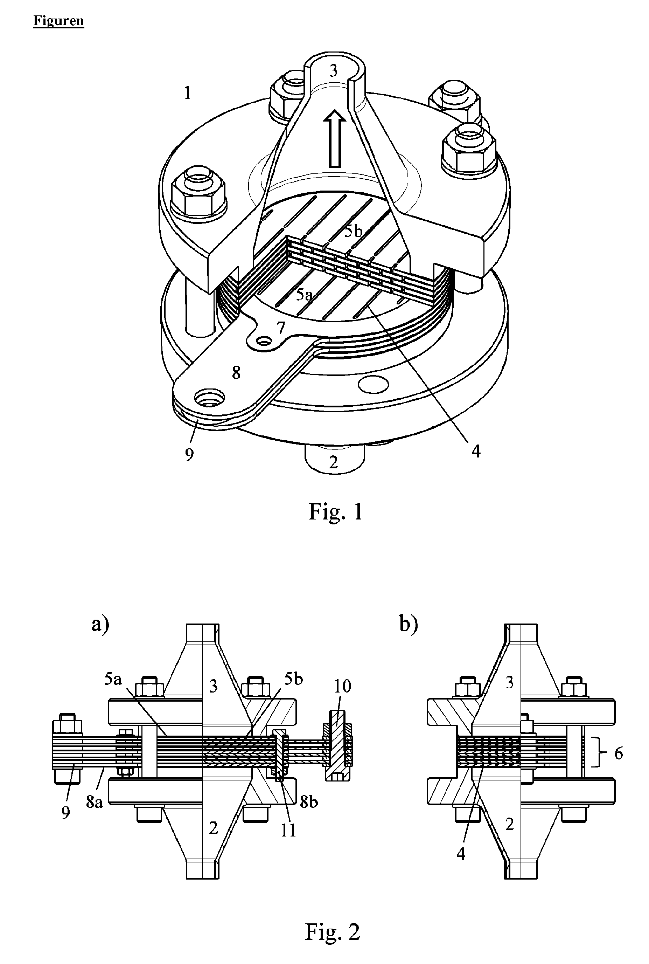

Figur 1) zeigt eine erfindungsgemäße Mikro-Lamellenelektrodenzelle (1) in perspektivischer Darstellung, teilweise geschnitten zur Illustration des inneren Aufbaus: Mehrere Anoden (5a) und Kathoden (5b) sind mit jeweils dazwischen angeordneten Rahmenelementen (7) aus Elastomerfolie zu einem Stapel (6 - vgl. Fig. 2) zusammengesetzt, der zwischen einem Einlass (2) und einem Auslass (3) fluiddicht verspannt ist. Die Elektroden sind mit äquidistant parallel angeordneten Schlitzen versehen, die in benachbarten Ebenen jeweils um ihren halben Mittenabstand zueinander versetzt angeordnet sind, so dass der Elektrolyt beim Passieren des Elektrodenstapels einen mäanderförmigen Pfad mit wiederholter Teilung und Wiedervereinigung an jeder Elektrode durchläuft. Jede der Elektroden ist mit einer Anschlusslasche (8) versehen, welche zungenförmig aus dem ansonsten im Wesentlichen kreisförmigen Grundriss der Elektroden herausragt. Die Anschlusslaschen aller Anoden ragen deckungsgleich an der einen Seite des Stapels heraus, die der Kathoden an der entgegengesetzten. Zwischen benachbarten Anschlusslaschen gleicher Polarität sind Kontaktscheiben eingesetzt, deren Dicke der Dicke jeweils einer Elektrode der entgegengesetzten Polarität zuzüglich der Dicke zweier Rahmenelemente entspricht und somit den Raum zwischen den Kontaktlaschen vollständig ausfüllt. Durch Verspannung der jeweils übereinander angeordneten Kontaktlaschen mittels jeweils eines Kontaktbolzens (10) werden alle Anoden und alle Kathoden jeweils leitend miteinander verbunden und können somit als Bündel parallel an den jeweiligen Pol der Stromquelle angeschlossen werden.

Figur 2) zeigt die in Figur 1 dargestellte Mikro-Lamellenelektrodenzelle in zwei zueinander senkrechten Seitenansichten, jeweils im Halbschnitt durch die Mittelebene (a) bzw. leicht hierzu versetzt (b). Die Ansichtsrichtung verläuft hierbei in a) senkrecht und in b) parallel zu der durch die Achsen der Kontaktbolzen definierten und parallel zu den Schlitzen sowie zur Hauptflussrichtung des Elektrolyten verlaufenden Mittelebene der Zelle.

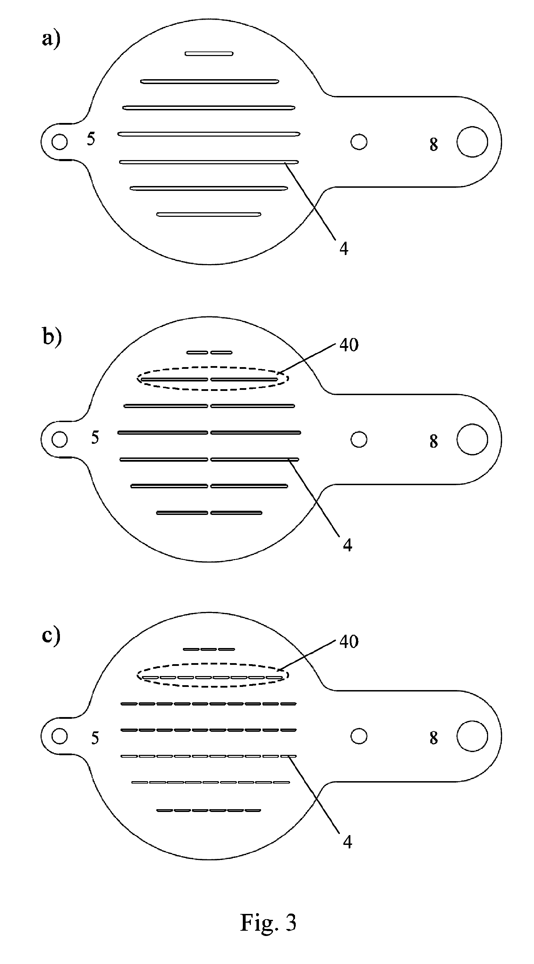

Figur 3) zeigt drei beispielhafte Elektrodengrundrisse mit unterschiedlichen Ausführungsformen der darin eingebrachten Schlitzöffnungen (4). Während sich diese insbesondere bei kleineren, dickeren Elektroden über den gesamten Anströmquerschnitt (i.A. definiert durch die Innenkontur der Rahmenelemente) erstrecken können, wie in Figur 3a) gezeigt, ist es insbesondere bei größeren und/oder dünneren Elektroden mitunter vorteilhaft, die zwischen den Schlitzöffnungen verlaufenden Elektrodenlamellen über gewisse Distanzen hinweg durch Unterbrechungen der Schlitze gegeneinander abzustützen (Figur 3b/c). Auf diese Wiese treten an die Stelle der ursprünglichen Schlitze (4) zueinander parallele Schlitzreihen (40). Beispielsweise können die Stützstege zwischen den Lamellen in gemeinsamen Fluchten über die Elektrode verteilt sein, wie in Figur 3b) dargestellt. Alternativ ist z.B. auch eine äquidistante Anordnung gemäß Figur 3c) möglich, was bei einheitlicher Länge der Schlitzreihen (z.B. bei rechteckigem Anströmquerschnitt der Elektrode) auch mit Fall 3b) koinzidieren kann. Es sind ferner unregelmäßige Anordnungen der Stützstege möglich und können je nach Form des Anströmquerschnitts der Elektroden z.B. aus statischen oder hydrodynamischen Gründen auch vorteilhaft sein.

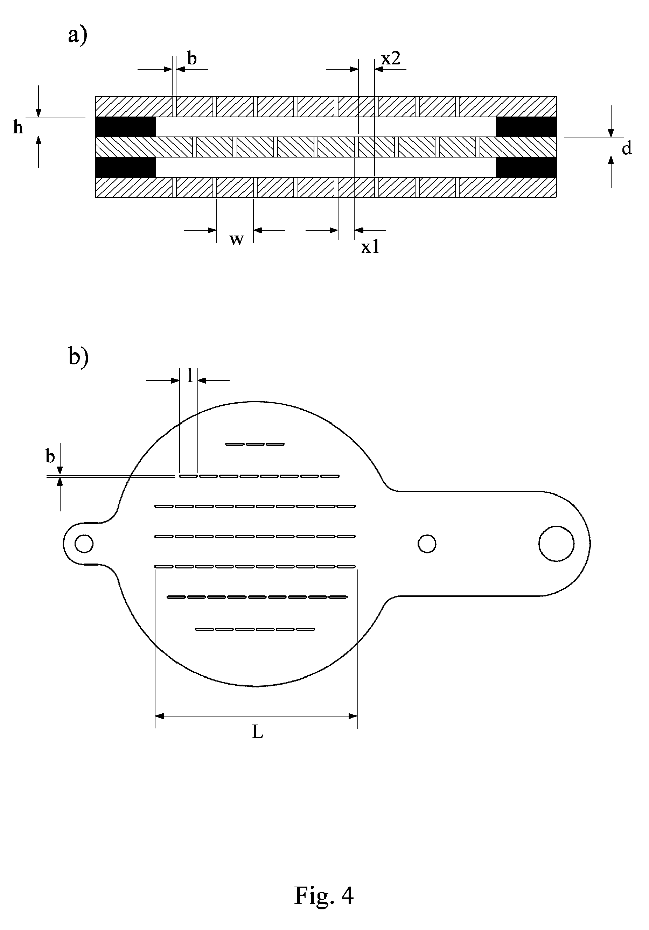

Figur 4) führt die hydrodynamisch relevanten geometrischen Größen des Elektrodenstapels bzw. der Elektroden auf und ordnet sie den jeweiligen geometrischen Elementen zu: Figur 4a) zeigt hierzu in schematisch reduzierter Form den Ausschnitt eines Elektrodenstapels einer Mikro-Lamellenelektrodenzelle im Längsschnitt senkrecht zum Verlauf der Schlitzöffnungen bzw. Schlitzreihen. Bezeichnet sind hier die Elektrodendicke d, der lichte Elektrodenabstand *h*, die Schlitzbreite b, der lichte Schlitzabstand w sowie die Abstände *x1* und x2 jeweils benachbarter Schlitze in benachbarten Elektroden. In der allgemeinsten Form der erfindungsgemäßen Mikro-Lamellenelektrodenzelle können diese Größen innerhalb jeder Elektrode sowie zwischen den Elektroden untereinander innerhalb der in den Ansprüchen genannten Grenzen variieren, so dass beispielsweise die Abstände eines Schlitzes zu allen seinen (bis zu sechs) Nachbarn in gewissen Grenzen unterschiedlich ausgeführt sind. Figur 4b) illustriert die Definition der Breite b sowie der Länge der Schlitze *l* bzw. der Schlitzreihen *L*.

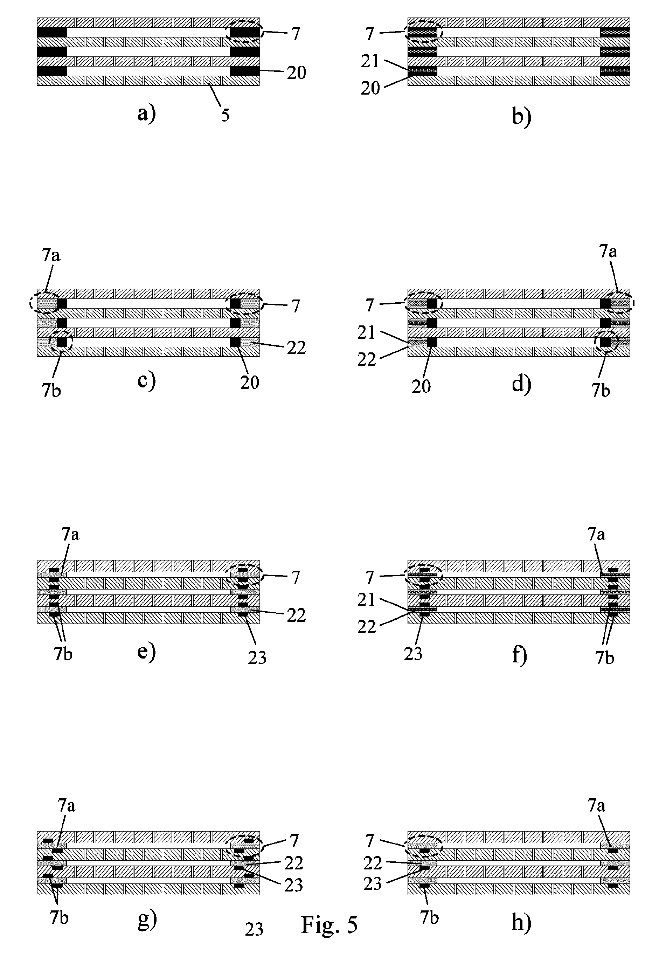

Figur 5) zeigt anhand eines in schematisch reduzierter Form im Längsschnitt dargestellten Ausschnitts eines Elektrodenstapels einer Mikro-Lamellenelektrodenzelle exemplarisch eine Reihe möglicher Ausführungsformen von Rahmenelementen (7). Diese sind im einfachsten Fall (Figur 5a) aus einer planaren Elastomerfolie (20) ausgeschnitten. Zwecks Erhöhung der Druckfestigkeit kann diese Elastomerfolie auch durch einen steifen Kern (21, z.B. Metallfolie, Draht- oder Fasergeflecht) verstärkt sein (Figur 5b). Ebenso der Stabilisierung gegen den Innendruck in der Zelle kann der Aufbau der Rahmenelemente aus einem Dichtelement (7b) aus elastomerem Material (20) und einem außerhalb angeordneten Distanzelement (7a) aus steifem, elektrisch isolierendem Material (22) dienen, welches hiermit eine Stützfunktion für das Dichtelement übernimmt. Das Distanzelement kann hierbei wiederum einteilig aus einheitlichem Material (Figur 5c) oder seinerseits als Verbundelement mit integrierter Verstärkung (21) aufgebaut sein (Figur 5d). Sollen sehr geringe Elektrodenabstände realisiert werden, kann eine räumliche Verlagerung der Dichtfunktion in Nuten in den Elektroden sinnvoll sein, um einen ausreichenden Verpressweg der Dichtelemente bei angemessener (d.h. nicht zu großer) relativer Einfederung/Verpressung zu ermöglichen. Die Figuren 5e) bis 5h) skizzieren hierfür mögliche Aufbauten des Distanzelements (7a), z.T. auch mit Verstärkung (21) sowie unterschiedliche Anordnungen der Dichtelemente (7b, z.B. als O-Ring: 23). Die in Figur 5h) gezeigte Ausführungsform ist dann möglich, wenn ein biegeschlaffes Distanzelement verwendet wird, welches durch das Dichtelement (7b bzw. 23) hinreichend stark gegen die dem Dichtelement jeweils gegenüber liegende Elektrodenoberfläche gepresst wird.

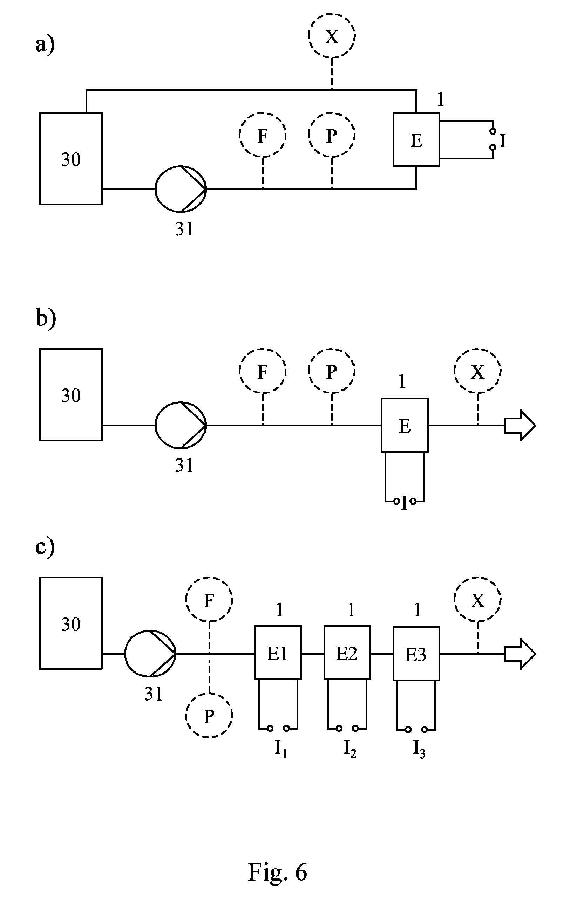

Figur 6) illustriert in beispielhafter und stark vereinfachter Form mögliche Betriebsweisen der erfindungsgemäßen Mikro-Lamellenelektrodenzelle. In den meisten Fällen wird der in Figur 6a) dargestellte Zirkulationsbetrieb sinnvoll sein, bei dem das zu behandelnde Abwasser chargenweise in einem Reservoir (30) vorgelegt und zur Behandlung in wiederholten Zyklen mittels einer Pumpe (31) durch die Zelle (1 bzw. E) gefahren wird. In jedem Durchlauf erfolgt dabei nur ein relativ geringer Abfall des CSB, wodurch die Verunreinigungskonzentration innerhalb der Zelle jeweils weitgehend homogen ist. Der Prozess kann mittels verschiedener Sensoren (z.B. für Druck, Massenstrom, Temperatur, pH-Wert, Leitfähigkeit etc.) bzw. Inline-Analyseverfahren überwacht und ggf. gesteuert/geregelt werden. In gewissen Fällen, insbesondere bei nicht zu hohen Star-CSB-Werten und nicht zu kleinen Ziel-CSB-Werten, ist es möglich und kann es sinnvoll sein, das Abwasser in einem einzigen Durchgang durch die Zelle zu behandeln. Um hierbei die für einen hinreichend guten Stofftransport erforderlichen Mindest-Strömungsgeschwindigkeiten in der Zelle zu erreichen, muss die Zelle hierbei mit einer vergleichsweise großen Zahl von jeweils relativ kleinen Elektroden bestückt werden. Zudem bieten sich hierfür Elektrodengeometrien mit besonders geringen Schlitzquerschnittflächen pro Elektrode und besonders geringen Interelektrodenabständen an. Im Vergleich zum Zirkulationsbetrieb wird hierfür eine Pumpe mit großer Förderhöhe bei vergleichsweise geringem Volumenstrom benötigt. Ggf. kann es ferner vorteilhaft sein, mehrere Mikro-Lamellenelektrodenzellen mit unterschiedlichen Elektrodengeometrien bzw. -bestückungen (mit in Flussrichtung steigendem Druckverlust) und ggf. abgestufter (in Stromrichtung fallender) Stromdichte fluidisch in Reihe zu schalten (Figur 6c).

Figur 7) zeigt den zeitlichen Verlauf des CSB aus den Anwendungsbeispielen 1 und 2. In Diagramm 7a) ist die Entwicklung des CSB in einer künstlichen Abwasserprobe (Ausgangsvolumen: 3 L) mit 2 g/L Phenol, 1 g/L NaCl und 40 g/L NaSO₄ während der elektrolytischen Behandlung mit einer kommerziell erhältlichen Labor-Elektrolysezelle mit Streckmetall-Elektroden bei 950 L/h Elektrolytdurchsatz und 16 A (entspr. 100 mA/cm²) dargestellt. Die Anpassung einer Modellkurve liefert für diesen Versuch einen Stofftransportkoeffizienten von etwa 4,63*10⁻⁵ m/s. Im Vergleich hierzu zeigt Diagramm 7b) die Entwicklung des CSB in einer Vergleichsprobe mit derselben Zusammensetzung und Ausgangsmenge, welche bei gleich hohem Umlaufvolumenstrom mit 32 A (entspr. etwa 167 mA/cm²) mit einer Mikro-Lamellenelektrodenzelle behandelt wurde. Hierfür liefert die Auswertung mit dem Prozessmodell einen Stofftransportkoeffizienten vom 1,65*10⁻⁴ m/s, womit der Abbauprozess trotz höherer Stromdichte über einen größeren CSB-Bereich mit voller Stromeffizienz gefahren werden kann und somit deutlich kürzere Prozesszeiten erreicht werden können. Die Mikro-Lamellenelektrodenzelle hatte in diesem Beispiel denselben Grundriss und Anströmquerschnitt wie die konventionelle Vergleichszelle, bei gleicher Elektrodenanzahl aber geringerer Bauhöhe. Aufgrund der geringeren Porosität der Elektroden ergab sich dabei für die Mikro-Lamellenelektrodenzelle eine größere aktive Fläche pro Elektrode und damit auch eine bessere Flächenausnutzung der Substrate.

Figuren 8) und 9) zeigen den zeitlichen Verlauf des CSB aus den Anwendungsbeispielen 3 und 4. In Figur 8) ist die Entwicklung des CSB in einer künstlichen Abwasserprobe (Ausgangsvolumen: 3 L) mit 700 mg/L des Pflanzenschutzmittels Merlin® während der elektrolytischen Behandlung mit einer kommerziell erhältlichen Labor-Elektrolysezelle mit Streckmetall-Elektroden unter gleichen Versuchsbedingungen wie in Beispiel 1 beschrieben dargestellt. Im Vergleich hierzu zeigt Figur 9) die Entwicklung des CSB in einer Vergleichsprobe mit derselben Zusammensetzung und Ausgangsmenge, welche bei gleich hohem Umlaufvolumenstrom unter gleichen Versuchsbedingungen wie in Beispiel 2 beschrieben mit einer Mikro-Lamellenelektrodenzelle behandelt wurde.

Figuren 10) und 11) zeigen den zeitlichen Verlauf des CSB aus den Anwendungsbeispielen 5 und 6. In Figur 10) ist die Entwicklung des CSB in einer künstlichen Abwasserprobe (Ausgangsvolumen: 3 L) mit 5300 mg/L des Pflanzenschutzmittels Atlantis® WG während der elektrolytischen Behandlung mit einer kommerziell erhältlichen Labor-Elektrolysezelle mit Streckmetall-Elektroden unter gleichen Versuchsbedingungen wie in Beispiel 1 beschrieben dargestellt. Im Vergleich hierzu zeigt Figur 11) die Entwicklung des CSB in einer Vergleichsprobe mit derselben Zusammensetzung und Ausgangsmenge, welche bei gleich hohem Umlaufvolumenstrom unter gleichen Versuchsbedingungen wie in Beispiel 2 beschrieben mit einer Mikro-Lamellenelektrodenzelle behandelt wurde.

Die in den vorangegangenen Beispielen verwendete Mikro-Lamellenelektrodenzelle hatte denselben Grundriss und Anströmquerschnitt wie die konventionelle Vergleichszelle, bei gleicher Elektrodenanzahl aber geringerer Bauhöhe. Aufgrund der geringeren Porosität der Elektroden ergab sich dabei für die Mikro-Lamellenelektrodenzelle eine größere aktive Fläche pro Elektrode und damit auch eine bessere Flächenausnutzung der Substrate.

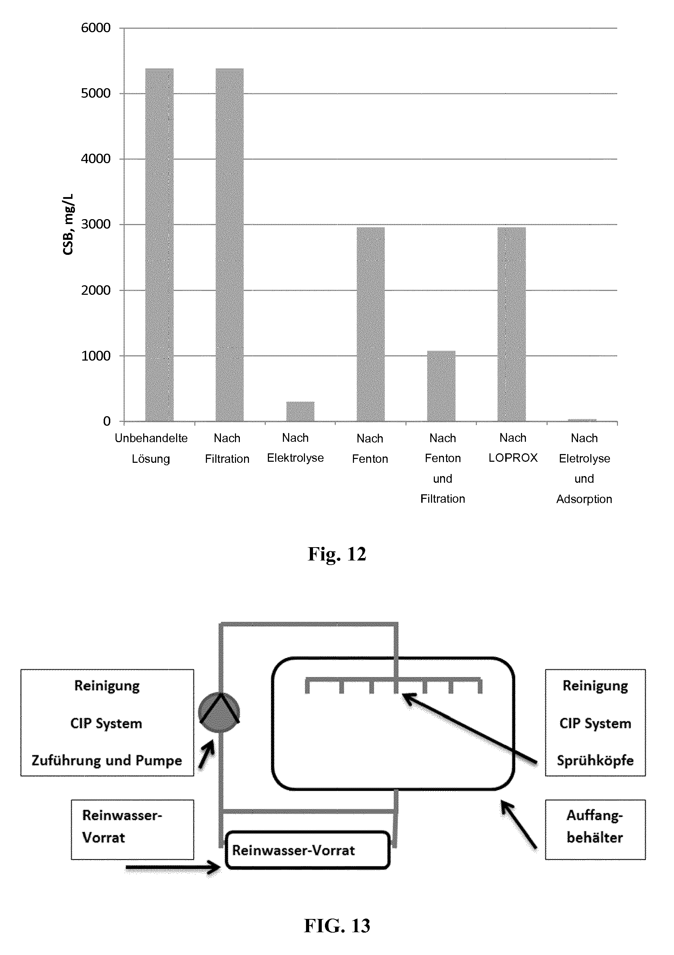

Figur 12) zeigt den CSB der in Beispiel 4 beschriebenen Abwasserprobe vor der Behandlung, den CSB nach einer einfachen Filtration, den resultierenden CSB nach der in Beispiel 4 beschriebenen Elektrolyse, den CSB nach einer Fenton-Reaktion, nach einer Fenton-Reaktion mit anschließender Filtration, den CSB nach einer LOPRAX®-Behandlung und den resultierenden CSB nach der in Beispiel 4 beschriebenen Elektrolyse und anschließender Adsorption an Aktivkohle.

Die Fenton-Reaktion wurde mit 24 g H₂O₂/L an einem Eisen-Katalysator bei einem pH-Wert < 3,5 durchgeführt.

Die LOPRAX®-Behandlung ist ein Verfahren zur Niederdruck-Nassoxidation für die Abwasservorreinigung und Schlammbehandlung. Hierbei wurde die Reaktion bei einer Temperatur von 200 °C mit einem Eisen-Katalysator bei einem pH-Wert < 2 durchgeführt.

Figur 13) zeigt einen typischen Aufbau eines Feldspritzgerätes mit einem integrierten CIP-System, bestehend aus Pumpe, Zuführungen, Reinwasser-Vorratsbehälter, Auffangbehälter und Sprühköpfen.

### Bezugszeichenliste:

- 1: Mikro-Lamellenelektrodenzelle
- 2: Einlass
- 3: Auslass
- 4: Öffnung/Schlitz in Elektrode
- 5: Elektrode
- 5a: Anode
- 5b: Kathode
- 6: Elektrodenstapel
- 7: Rahmenelement
- 7a: Distanzelement
- 7b: Dichtelement
- 8: Kontaktlasche (a: Anode / b: Kathode)
- 9: Kontaktscheibe
- 10: Kontaktbolzen
- 11: Fixierschraube aus elektrisch isolierendem Material
- 20: Elastomerfolie/-beschichtung
- 21: Verstärkungselement
- 22: Isolationsfolie/-beschichtung
- 23: O-Ring
- 30: Vorlagebehälter (Abwasserreservoir)
- 31: Pumpe
- 40: Schlitzreihe

## Patentansprüche

1. Verfahren zur Reinigung von Feldspritzgeräten von Pflanzenschutzmittelrückständen, wobei eine
Elektrolysezelle, umfassend wenigstens einen Einlass und wenigstens einen Auslass für den Elektrolyten, ferner umfassend eine Anzahl von planaren, mit durchströmbaren Öffnungen versehenen Elektroden, von denen wenigstens eine durch funktionelle Beschichtung als Anode mit einem im Vergleich zur Standard-Wasserstoffelektrode erhöhten Überpotenzial für die Bildung von Sauerstoff und wenigstens eine weitere als Gegenelektrode (Kathode) ausgebildet ist, die Elektroden hinsichtlich ihrer Polarität in alternierender oder paarweise alternierender Reihenfolge angeordnet einen Stapel bilden, ferner umfassend eine Anzahl von Rahmenelementen, welche jeweils einzeln zwischen benachbarten Elektroden angeordnet sind, wobei die Rahmenelemente gleichzeitig für eine gegenseitige elektrische Isolierung, eine gegenseitige fluidische Abdichtung sowie für einen definierten gegenseitigen Abstand der jeweils angrenzenden Elektroden sorgen und der so gebildete Elektrodenstapel derart zwischen dem Einlass und dem Auslass eingebaut ist, dass ein zur Umgebung hin fluiddichter, durchströmbarer Elektrolytpfad vom Einlass durch den Elektrodenstapel zum Auslass entsteht, **dadurch gekennzeichnet, dass**
benachbarte Elektroden einen gegenseitigen lichten Abstand von nicht mehr als 0,5 mm haben,
die durchströmbaren Öffnungen in den Elektroden als parallel zueinander verlaufende, die Elektroden im Wesentlichen senkrecht zu ihrer Oberfläche durchbrechende Schlitze oder Schlitzreihen ausgebildet sind, wobei die einzelnen Schlitze eine Breite von nicht mehr als 1,5 mm und eine Länge von mindestens der dreifachen Breite vorweisen und in einem zu ihrer maximalen Ausdehnung senkrechten lichten Abstand von wenigstens der zweifachen Schlitzbreite zueinander stehen und
die Schlitze bzw. Schlitzreihen in benachbarten Elektroden jeweils parallel zueinander verlaufen und senkrecht zu der maximalen Ausdehnung der Schlitze bzw. Schlitzreihen definiert zueinander versetzt angeordnet sind in der Weise, dass der Abstand einer Schlitzreihe in einer Elektrode zu jeder unmittelbar benachbarten Schlitzreihe in den unmittelbar benachbarten Elektroden um nicht mehr als 25% variiert,
mobil auf dem Feldspritzgerät montiert ist oder stationär betrieben wird,
umfassend die Schritte:
a) Bereitstellung von Wasser,
b) Zuführen des Wassers zu auf dem Feldspritzgerät montierten Sprühköpfen, wobei die Sprühköpfe mit Pflanzenmittelrückständen kontaminiert sind,
c) Reinigung der Sprühköpfe mit dem Wasser,
d) Auffangen einer wässrigen Lösung aus Pflanzenschutzmittelrückständen,
e) Zuführen der wässrigen Lösung zur Elektrolysezelle,
f) Elektrolytische Oxidation der Pflanzenschutzmittelrückstände in der wässrigen Lösung mithilfe der Elektrolysezelle,
g) Abführen der elektrolysierten Lösung.

2. Verfahren nach Anspruch 1, **dadurch gekennzeichnet, dass** die elektrolysierte Lösung aus Schritt d) der Reinigung der Sprühköpfe in Schritt b) zugeführt wird.

3. Verfahren nach einem der vorherigen Ansprüche, **dadurch gekennzeichnet, dass** das Verfahren kontinuierlich durchgeführt wird.

4. Verfahren nach einem der vorherigen Ansprüche, **dadurch gekennzeichnet, dass** vor der elektrolytischen Oxidation in Schritt f) eine Partikelabtrennung durchgeführt wird.

5. Verfahren nach Anspruch 4, **dadurch gekennzeichnet, dass** die Partikelabtrennung mithilfe einer Filtration durchgeführt wird.

6. Verfahren nach einem der vorherigen Ansprüche, **dadurch gekennzeichnet, dass** nach der elektrolytischen Oxidation in Schritt f) eine Adsorption an Aktivkohle durchgeführt wird.

7. Verfahren nach einem der vorherigen Ansprüche, **dadurch gekennzeichnet, dass** der CSB-Gehalt der wässrigen Lösung in Schritt d) und e) von 500 mg/L bis 40 g/L, bevorzugt 500 mg/L bis 20 g/L, besonders bevorzugt 500 mg/L bis 10 g/L ist.

8. Verfahren nach einem der vorherigen Ansprüche, **dadurch gekennzeichnet, dass** die Anoden der Elektrolysezelle mit (z.B. durch Dotierung mit Bor) elektrisch leitfähigem Diamant oder diamantartigem Kohlenstoff beschichtet sind.

9. Verfahren nach einem der vorherigen Ansprüche, **dadurch gekennzeichnet, dass** die Anoden der Elektrolysezelle ein Basismaterial umfassen, wobei das Basismaterial ein Metall ist.

10. Verfahren nach Anspruch 7, **dadurch gekennzeichnet, dass** das Metall der Elektrolysezelle ausgewählt ist aus der Gruppe bestehend aus Niob, Wolfram, Tantal, Titan, dotiertes Silizium oder Legierungen aus diesen Metallen.

11. Verfahren nach einem der vorherigen Ansprüche, **dadurch gekennzeichnet, dass** die Kathoden der Elektrolysezelle aus einem Material gefertigt sind, welches ausgewählt ist aus der Gruppe bestehend aus Edelstählen, Nickelbasislegierungen, Kupfer(-legierungen) und Aluminium(-legierungen).

12. Verfahren nach einem der vorherigen Ansprüche, **dadurch gekennzeichnet, dass** die Breite der Schlitze der Elektrolysezelle kleiner als die halbe Dicke der Elektroden ist.

13. Verfahren nach einem der vorherigen Ansprüche, **dadurch gekennzeichnet, dass** die Breite der Schlitze der Elektrolysezelle Werte von 0,2 mm bis 0,8 mm annimmt.

14. Verfahren nach einem der vorherigen Ansprüche, **dadurch gekennzeichnet, dass** in der Elektrolysezelle der Abstand der Schlitze bzw. Schlitzreihen innerhalb jeder Elektrode sowie in allen Elektroden innerhalb der Zelle um nicht mehr als + 10% variiert und Werte zwischen 2 mm und 10 mm annimmt.

15. Verfahren nach einem der vorherigen Ansprüche, **dadurch gekennzeichnet, dass** in der Elektrolysezelle der gegenseitige lichte Abstand benachbarter Elektroden Werte von 0,2 mm bis 0,4 mm annimmt.
